# EUROPEAN PATENT APPLICATION

(11) **EP 4 811 202 A1**
(43) Date of publication of application: **23.09.2026**
(21) Application number: 25275021.1
(22) Date of filing: 21.03.2025
(51) Int. Cl.: G06F 30/20, G06F 30/15, G06F 119/08

(54) **METHOD, APPARATUS AND COMPUTER PROGRAM FOR CONFIGURING A THERMODYNAMIC SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Methods, apparatus and computer programs for configuring a thermodynamic system are disclosed. In an embodiment, a computer-implemented method for configuring a thermodynamic system comprises obtaining information indicative of first and second temperature values and first and second entropy values respectively defining initial and target states of a fluid. One or more configurations of the thermodynamic system are identified based on component process information indicative of an effect of the component on the temperature and entropy of the fluid, and based on a cost function. The cost function is related to properties of each component, for example, its mass or size. Each configuration that is identified comprises a combination of components capable of converting the fluid from the initial state to the target state.

## Description

### FIELD

The present invention relates to a method, apparatus and computer program for configuring a thermodynamic system.

### BACKGROUND

Vehicles, such as aircraft, often include thermodynamic sub-systems, such as thermal management systems (e.g. refrigeration systems) or power cycle systems (e.g. engines). Such systems typically involve energy being transferred to and/or from a fluid, for instance to manage the temperature of certain components or areas within the vehicle. For example, a thermal management system may include an air cycle system (ACS). An ACS may be configured to supply cooled air to parts of the vehicle that require cooling, such as a cockpit or passenger compartment, or an avionics compartment.

Thermodynamic systems are typically configured by human designers based on their own accumulated knowledge of how to arrange system components and which components to select. Such knowledge is typically gained over months or years of experience of working with similar existing systems. As such, personnel with suitable experience become invaluable to the design and operation of systems. However, even highly experienced personnel may still not arrive at the best configuration for a given scenario. There is therefore a need for an improved method of designing such systems, and in particular, for evaluating a number of possible configurations of a system.

### SUMMARY

According to a first aspect of the present invention, there is provided a computer-implemented method for configuring a thermodynamic system, the method comprising: obtaining information indicative of a first temperature value and a first entropy value defining an initial state of a fluid, and indicative of a second temperature value and a second entropy value defining a target state of the fluid; obtaining, for each one of a plurality of components, component process information indicative of an effect of the component on the temperature and entropy of the fluid, and component property information indicative of one or more properties of the component; identifying one or more configurations of the thermodynamic system based on the component process information and a cost function related to said one or more properties, wherein each configuration comprises a respective combination of components capable of converting the fluid from the initial state to the target state, said combination of components being selected from among the plurality of components.

In some embodiments according to the first aspect, each configuration further comprises one or more operating parameters associated with one or more of the components included in said configuration.

In some embodiments according to the first aspect, for one or more of the plurality of components the effect of said component on the temperature and entropy of the fluid is dependent on said one or more operating parameters, and the component function information for said component is indicative of a relationship between the one or more operating parameters and the effect of said component on the temperature and entropy of the fluid.

In some embodiments according to the first aspect, the one or more operating parameters include a flow rate parameter defining a flow rate of the fluid through one or more of the components included in said configuration.

In some embodiments according to the first aspect, identifying one or more configurations of the thermodynamic system comprises selecting said ones of the plurality of components according to one or more criteria.

In some embodiments according to the first aspect, the one or more criteria relate to the one or more properties of each component.

In some embodiments according to the first aspect, the one or more criteria include a maximum number of components that may be selected within any given configuration.

In some embodiments according to the first aspect, the one or more criteria are user-defined.

In some embodiments according to the first aspect, the cost function comprises a multi-objective cost function.

In some embodiments according to the first aspect, a value of the multi-objective cost function is calculated based on a weighted sum of respective values associated with a plurality of objectives.

In some embodiments according to the first aspect, respective weightings for one or more of the values associated with the plurality of objectives are user-defined.

In some embodiments according to the first aspect, wherein the cost function is user-defined.

In some embodiments according to the first aspect, the one or more configurations of the thermodynamic system are identified using a pathfinding algorithm, and the method comprises outputting a result of the pathfinding algorithm.

In some embodiments according to the first aspect, outputting the result of the pathfinding algorithm comprises outputting a respective value of the cost function associated with each of the identified one or more configurations.

In some embodiments according to the first aspect, outputting the result of the pathfinding algorithm comprises outputting information indicative of an optimum configuration among the identified one or more configurations, the optimum configuration being a configuration associated with an optimum value of the cost function among the identified one or more configurations. For example, the optimum value of the cost function may be the lowest value or the highest value, depending on the embodiment.

According to a second aspect of the present invention, there is provided a method of selecting a configuration of a thermodynamic system, the method comprising: using the computer-implemented method according to the first aspect to identify one or more configurations of the thermodynamic system; and selecting the configuration for the thermodynamic system from among the identified one or more configurations in dependence on a respective value of the cost function associated with each identified configuration.

In some embodiments according to the second aspect, the optimum configuration is selected as the configuration for the thermodynamic system.

According to a third aspect of the present invention, there is provided a method of manufacturing or assembling a thermodynamic system, the method comprising: using the method according to the second aspect to select a configuration for the thermodynamic system; and manufacturing or assembling the thermodynamic system according to the selected configuration.

According to a fourth aspect of the present invention, there is provided a computer program comprising instructions which, when executed by one or more processors, cause said one or more processors to carry out a method according to the first aspect.

According to a fifth aspect of the present invention, there is provided a non-transitory computer-readable storage medium having stored thereon a computer program according to the fourth aspect.

According to a sixth aspect of the present invention, there is provided apparatus comprising: the non-transitory computer-readable storage medium according to the fifth aspect; and one or more processors arranged to execute the computer program stored on said non-transitory computer-readable storage medium.

### BRIEF DESCRIPTION OF THE FIGURES

Embodiments of the invention will now be described by way of example only with reference to the figures, in which:
Figure 1 schematically illustrates a thermodynamic system in the form of an air cycle system;
Figure 2 schematically illustrates a temperature-entropy diagram for the air cycle system of Fig. 1;
Figure 3 is a flowchart showing a computer-implemented method of configuring a thermodynamic system;
Figure 4 schematically illustrates a first user interface for obtaining input parameters for use with the method of Fig. 3;
Figure 5 schematically illustrates a second user interface for obtaining design parameters for use with the method of Fig. 3; and
Figure 6 schematically illustrates apparatus for performing a computer-implemented method for configuring a thermodynamic system.

### DETAILED DESCRIPTION

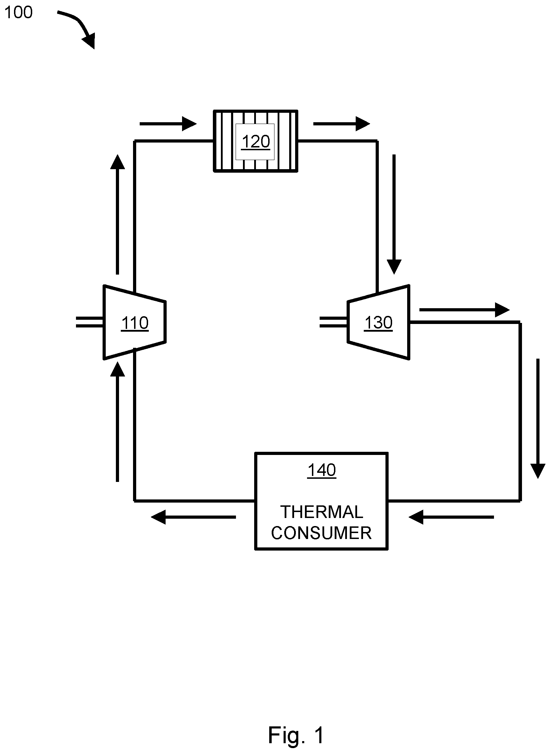

Referring now to Fig. 1, a thermodynamic system in the form of an air cycle system (ACS) is schematically illustrated, according to an embodiment of the present invention. An ACS is an example of a thermodynamic system that transfers energy to and/or from a fluid, in this case air. The system 100 may, for example, be implemented in a vehicle. In the present embodiment the system 100 is included in an aircraft. In other embodiments, a system 100 such as the one shown in Fig. 1 may be implemented in vehicles other than aircraft, for example in a road vehicle, train, ship or submarine. In yet other embodiments, a system 100 such as the one shown in Fig. 1 may be used in applications other than vehicles, for example in structures such as residential homes, offices, factories, warehouses and so on.

The ACS 100 comprises an air compression stage 110, a heat exchange stage 120 and an air expansion stage 130. An ACS typically includes a number of rotating components, such as one or more compressors 110, turbines 130, shafts 190 and/or motors 180, which are collectively referred to as an air cycle machine, ACM. The ACS comprises the ACM (i.e. the rotating components), plus one or more components for performing certain functions in the system, such as removing heat from the system (i.e. the heat exchange stage 120), manipulating airflow paths, extracting water, and so on. The ACS is configured to implement a thermodynamic refrigeration cycle, also referred to as a reverse Brayton cycle, whereby a fluid (in this case, air) is compressed, raising both its pressure and temperature. Thermal energy is then removed from the compressed air to lower its temperature, followed by expanding the compressed air to lower its temperature still further (in particular, to a temperature that is below the temperature of the air at the start of the cycle, resulting in a net cooling effect).

The system 100 further comprises an airflow recirculation path configured to direct the cooled air from the ACS to one or more locations 140 requiring cooling, and from said one or more locations to an inlet of the air compression stage 110. Each location 140 that requires cooling may be referred to as a "thermal consumer". In the present embodiment, a single thermal consumer 140 is illustrated, but in other embodiments the airflow recirculation path may be configured to direct the cooled air to any number of locations/thermal consumers 140. In embodiments in which the cooled air is directed to a plurality of thermal consumers, the thermal consumers may be arranged in parallel or in series along the airflow recirculating path. In embodiments with three or more thermal consumers, the thermal consumers may be arranged wholly in parallel, wholly in series, or in a combination of parallel and series. For example, two thermal consumers may be arranged in parallel, with a third thermal consumer arranged in series either upstream of downstream of the two thermal consumers that are arranged in parallel. The arrows in Fig. 1 illustrate the direction of flow around the airflow recirculation path and through the ACS. In Fig. 1, the airflow recirculation path runs from the output of the air expansion stage 130 to an input of the air compression stage 110.

Together, the ACS and the airflow recirculation path form a closed loop, meaning that cooled air that is delivered to the one or more thermal consumers 140 is subsequently returned to the inlet of the ACS (i.e. the inlet of compressor 110 in the present embodiment). In practice, the air that is returned to the inlet of the ACS may still be relatively cool compared to an ambient air temperature, and as a result the ACS has to do less work (i.e. consume less energy) to cool the air back to the desired temperature.

The air compression stage 110 of the ACS is arranged to receive and compress a flow of air so as to produce a flow of compressed air. For example, the air compression stage 110 may comprise one or more compressors. In the present embodiment the air compression stage comprises a single compressor 110, but in other embodiments the air compression stage may comprise any number of compressors. For avoidance of doubt, the term "compressor" in this context should be understood as encompassing both rotating and non-rotating (e.g. reciprocating) compressors.

In embodiments that comprise a plurality of compression stages (e.g. a plurality of compressors), a heat exchange stage may be provided between consecutive compression stages, to remove excess heat from the fluid that is generated by the first compression stage before the compressed fluid reaches the next compression stage. Alternating compression and heat exchange stages in this way can help to keep the fluid below a temperature limit when using multiple compression stages. The heat exchange stage 120 of the ACS is arranged to cool the compressed air (i.e. air that has been compressed by the air compression stage 110). In the present embodiment, the heat exchange stage 120 comprises a heat exchanger 120 connected between an outlet of the air compression stage 110 and an inlet of the air expansion stage 130. Since the heat exchanger 120 is located downstream of the air compression stage 110 (i.e. downstream relative to the direction of airflow within the ACS and the airflow recirculation pathway), air flows through the heat exchanger 120 after having been compressed by the air compression stage 110. Accordingly, the heat exchanger 120 may be referred to as an "aftercooler heat exchanger", or simply as an "aftercooler". The aftercooler 120 is configured to extract heat from the compressed air, for example by conducting heat from the compressed air to a cooling medium that is at a lower temperature than the compressed air. Depending on the embodiment, the aftercooler 120 may be configured to receive a cooling medium in either the gas or liquid phase. In some embodiments the cooling medium may change phase from a liquid to a gas as it passes through the aftercooler 120.

The air expansion stage 130 is arranged to expand air that is received from the heat exchange stage 120 (e.g. from aftercooler 120) so as to output a flow of cooled air. Here, the term "cooled air" is used to refer to the flow of air that is outputted from the air expansion stage 130 at a temperature that is lower than a temperature at which the air is initially received by the air compression stage 110 of the ACS. In the present embodiment, the air expansion stage 130 comprises a turbine 130, although in other embodiments other means of expanding the compressed air may be provided. In some embodiments, the air expansion stage 130 may comprise a plurality of turbines. In some embodiments, the air expansion stage 130 may comprise one or more components other than turbines for expanding the compressed air. For example, in some embodiments the air expansion stage 130 may comprise a reciprocating (e.g. piston-based) mechanism for expanding the compressed air, in which case the temperature of the air may be lowered as a result of the work done by the compressed air in causing the piston(s), leading to energy being extracted from the compressed air.

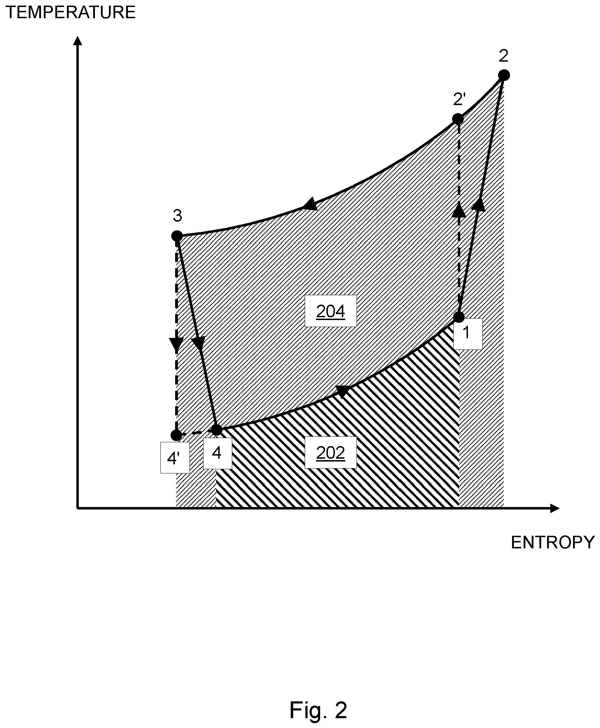

The operation of thermal management systems, for example air cycle systems, can be described via a temperature-entropy diagram, in which the temperature and entropy of the fluid (e.g. air, in the case of an ACS) is plotted at various points within the system. Figure 2 schematically illustrates a temperature-entropy diagram for the ACS 100 of Fig. 1, according to an embodiment of the present invention. In the temperature-entropy diagram of Fig. 2, the typical real-world performance of such a system is indicated by the solid line connecting nodes 1, 2, 3, and 4, whilst the idealised turbomachinery performance (in other words, idealised performance of the air compression stage 110 and the air expansion stage 130) is illustrated the dashed lines connecting nodes 1, 2', 3 and 4'.

In Fig. 2, node 1 denotes the temperature and entropy of the fluid after absorbing heat from the thermal consumer 140, node 2 denotes the temperature and entropy of the fluid after compression in the compression stage 110, node 3 denotes the temperature and entropy of the fluid after passing through the heat exchange stage 120, and node 4 denotes the temperature and entropy of the fluid after the air expansion stage 130. For comparison, the path from node 1 to node 2' indicates the theoretical performance of the system in the case of ideal compression, whilst the path from node 3 to node 4' indicates the theoretical performance of the system in the case of ideal expansion. In a real-world system, entropy is generated during every process (including heat exchange processes and expansion/compression processes), for example as indicated by the horizontal movement along the entropy axis between nodes 1 and 2 and nodes 3 and 4 (for compression and expansion processes). In thermodynamic terms, generation of entropy equates to irreversibility, meaning that more work is required to operate the system in comparison to a hypothetical equivalent idealised system.

In a temperature-entropy diagram, such as the one illustrated in Fig. 2, the area under the heat transfer process curves (i.e. curves 2-3 and 4-1) equates to the amount of heat transferred to or from the fluid. For example, heat is transferred to the fluid as it passes through the thermal consumer 140, whilst heat is transferred from the fluid as it passes through the heat exchange stage 120.

The work done by a closed system is equal to the difference between the heat in and heat out. Therefore, the work done by a system can be calculated geometrically from its temperature-entropy diagram. The amount of energy that is absorbed by the fluid as it passes through the thermal consumer 140, as given by the first shaded area 202 under the curve between node 4 and node 1, can be referred to as the "cooling requirement" of the system 100. The amount of energy that is removed from the fluid as it passes through the heat exchange stage 120 is given by the second shaded area 204 under the curve between node 2 and node 3. The work done by the system can be calculated as the area of the second shaded area 204 minus the area of the first shaded area 202.

The relationship between the number of constituent parts of a fluid, the phases that fluid can/will exist in throughout the cycle and the degrees of freedom of the system can be described by the Gibbs-Duhem relation: $F = 2 + C - P$ where F = degrees of freedom, C = number of constituent parts of the fluid, and *P* = the number of phases in which the fluid can exist. In the case of an air cycle system such as the ACS 100 shown in Fig. 1, the air can be described at mixture level as opposed to breaking the fluid down conceptually into nitrogen, oxygen etc., and therefore C = 1. Also, in the ACS 100 the fluid only exists in a single gaseous phase within the system, and therefore P = 1. Hence, by the Gibbs-Duhem relation, the number of degrees of freedom F in the ACS 100 is equal to (2 + 1 - 1) = 2. It follows that only two properties of the fluid are required to be able to fully describe its physical state, since if two such properties are known then the remaining properties can be determined, e.g. via calculation or from a look-up table. The properties that describe the state of the fluid may be referred to as "state properties" (e.g. temperature, pressure, density, viscosity, entropy etc.).

These principles can be applied to fully define the thermodynamic requirement of a system, for example an amount of cooling provided by the system, which in turn enables the thermodynamic requirement to be plotted on a temperature-entropy (T-S) diagram before the system configuration has been chosen. Purely by way of an example, the typical cooling requirement for an aircraft cockpit (e.g. the thermal consumer 140 in the ACS 100 of Fig. 1) may be defined as follows:
- 20 kJ/kg of specific heat
- thermal consumer mean temperature of 20 degC
- thermal consumer mean pressure of 1 bar absolute

The mean temperature and pressure may, for example, be calculated as the mean of the inlet and output temperatures and pressures, i.e. the temperatures and pressures at the inlet and outlet of the thermal consumer 140.

Using the information provided, the inlet and outlet temperature and pressure can be calculated using fundamental thermodynamic equations, based on the specific heat capacity of the working fluid (e.g. approximately 1005 J/kg.K for air) and a known pressure drop across the thermal consumer (e.g. 10000 Pa for a cockpit). The specific entropy can then be calculated from the temperature and pressure, for each of the inlet and the outlet of the thermal consumer 140. The temperature and entropy at the inlet may be referred to as the inlet condition, and the temperature and entropy at the outlet may be referred to as the outlet condition. The inlet condition defines the position of node 4 in Fig. 2, whilst the outlet condition defines the position of node 1 in Fig. 2. In other words, provided the fluid is conditioned to the properties described by node 4, then after the fluid has accepted the heat from the thermal consumer 140 it will have the properties described by node 1.

Once the positions of nodes 1 and 4 are known, embodiments of the present invention can allow a suitable configuration to be chosen for the rest of the system, to ensure that the fluid provided by the system will have the requisite properties (e.g. the properties described by node 4 in Fig. 2). Here, the term 'configuration' refers to the types of components 110, 120, 130 that make up the system, and the order in which they operate on the fluid (i.e. the order in which the components 110, 120, 130 are connected).

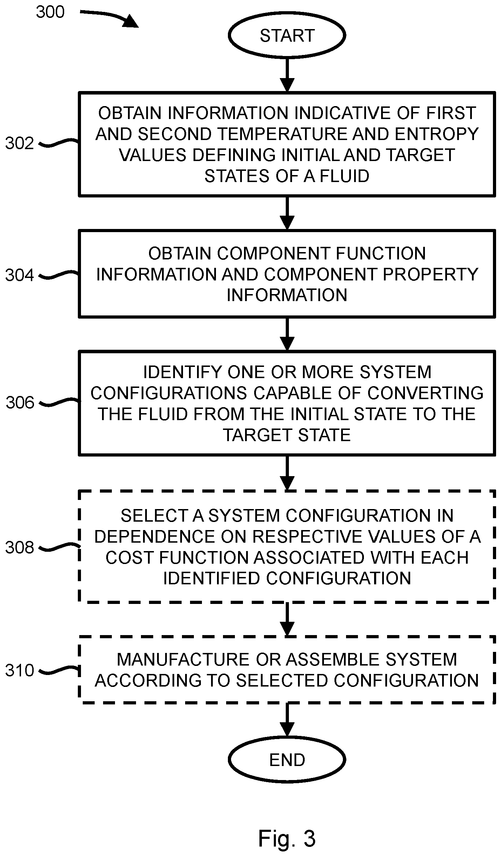

Referring now to Fig. 3, a flowchart is illustrated showing a computer-implemented method for configuring a thermodynamic system, according to an embodiment of the present invention. A method such as the one shown in Fig. 3 may, for example, be used to evaluate possible configurations of an ACS system. The method provides an algorithm that can be implemented, e.g. in the form of a computer program, to quickly and easily evaluate a plurality of possible configurations of the system without requiring specialist knowledge, to identify one or more optimised configurations for the system. The method of Fig. 3 can be applied to both closed-loop systems (e.g. as shown in Fig. 1), in which a fluid repeatedly circulates around a closed loop, and open-loop systems which discard the air to the ambient atmosphere after cooling the thermal consumer.

Broadly speaking, the method involves defining initial and target points on the temperature-entropy (T-S) diagram, each of which defines a particular state of the fluid in terms of its temperature and entropy, and then evaluating possible configurations of the system that are capable of converting the fluid from one state to the other (i.e. from the defined initial state to the defined target state on the T-S diagram).

First, in step 302 information indicative of a first temperature value, a first entropy value, a second temperature value, and a second entropy value are obtained. The first temperature value and the first entropy value together define the initial state of the fluid, whilst the second temperature value and the second entropy value together define the target state of the fluid. The first temperature value and the first entropy value may therefore be referred to as an initial temperature value and an initial entropy value, respectively. Similarly, the second temperature value and the second entropy value may therefore be referred to as a target temperature value and a target entropy value, respectively. The first temperature value and the first entropy value can be treated as coordinates defining a position of one node on the T-S diagram (e.g. node 1 in Fig. 2). The second temperature value and the second entropy value can be treated as coordinates defining a position of another node on the T-S diagram (e.g. node 4 in Fig. 2). The first temperature value and first entropy value may be referred to as 'initial state information', and the second temperature value and second entropy value may be referred to as 'target state information'.

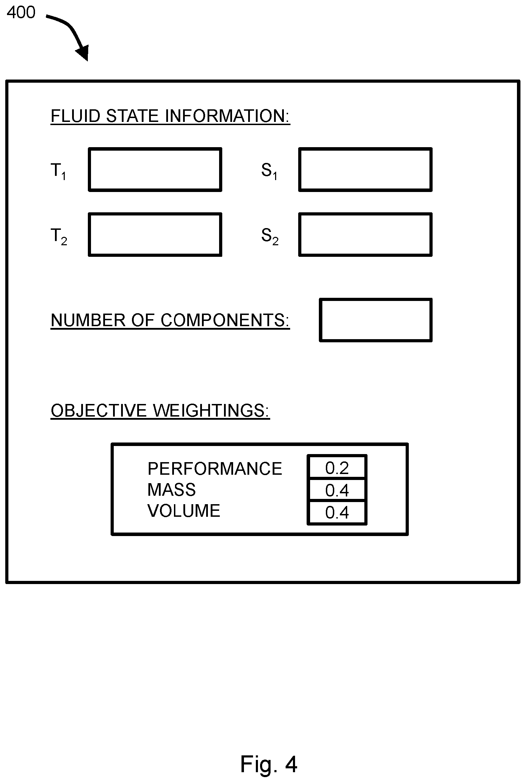

In some embodiments, one or more of the first temperature value, the first entropy value, the second temperature value, and the second entropy value may be user-defined. In such embodiments, user-defined values for the first temperature value, the first entropy value, the second temperature value, and/or the second entropy value may be received via any suitable user interface, for instance a graphical user interface (GUI). An example of a GUI for obtaining user-defined first **T,** S values and second T**,** S values is illustrated in Fig. 4. The GUI 400 comprises user input elements, e.g. in the form of text boxes, dropdown menus, etc., through which the user can input values of the first temperature value, the first entropy value, the second temperature value, and/or the second entropy value. In the present embodiment, the GUI 400 comprises four text boxes for the user to respectively enter values of the first temperature value (T₁), the first entropy value (S₁), the second temperature value (T₂), and the second entropy value (S₂). In other words, in the present embodiment the values received via the GUI 400 are indicative of the first temperature and entropy values and the second temperature and entropy values.

In other embodiments, one or more of the first temperature value, the first entropy value, the second temperature value, and the second entropy value may not be user-defined but may be determined by other means. For example, in some embodiments one or more of the first temperature value, the first entropy value, the second temperature value, and the second entropy value may calculated by software. For instance, in some embodiments the thermodynamic system may be an open-loop system configured to receive bleed air from a gas turbine. In some such embodiments the initial state of the fluid (and hence, the first temperature value and first entropy value) may be determined by software that has been, or is being, used to design the gas turbine.

As another example, in some embodiments a user may specify one or more design parameters which can then be used to automatically calculate the first temperature and entropy values and/or the second temperature and entropy values. Such design parameters are an example of information that is indicative of the first temperature and entropy values and/or the second temperature and entropy values. For instance, the user may specify one or more design parameters such as a desired mean temperature of the thermal consumer 140 (e.g. a cockpit or passenger cabin on an aircraft), a cooling requirement (e.g. the amount of heat to be extracted from the thermal consumer 140), a cabin pressure, and a pressure drop (e.g. a pressure drop between the air inlet and the air outlet in the cabin). The first temperature and first entropy values, and/or the second temperature and second entropy values, may then be automatically calculated (e.g. using software) based on the user-defined target condition (e.g. the one or more design parameters).

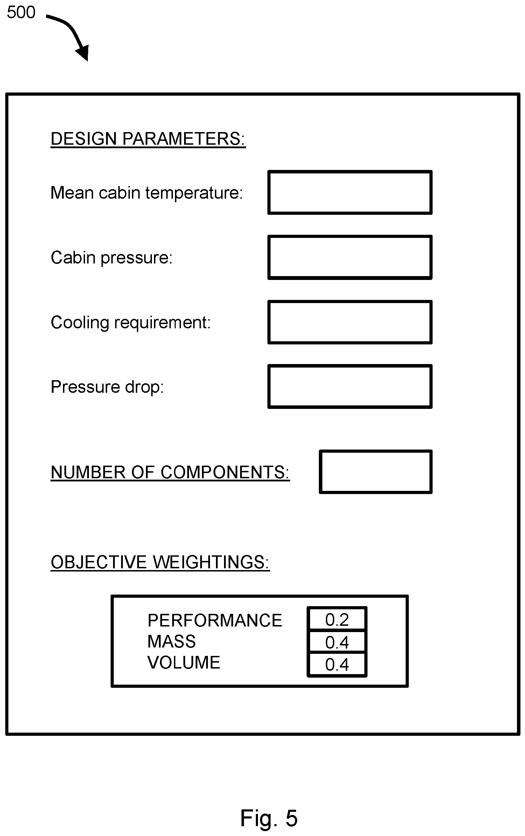

An example of a GUI for obtaining such design parameters is illustrated in Fig. 5. The GUI 500 of the present embodiment differs from the GUI 400 of Fig. 4 in that the GUI 500 comprises user input elements, e.g. in the form of text boxes, dropdown menus, etc., through which the user can input values of one or more design parameters that can be subsequently used to obtain (e.g. calculate, or retrieve from a look-up table) the first temperature value, the first entropy value, the second temperature value, and/or the second entropy value. In the present embodiment, the GUI 500 is configured to allow a user to define a mean cabin temperature and a cooling requirement as design parameters.

Continuing with reference to Fig. 3, in step 304 component process information and component property information is obtained for each one of a plurality of components. For example, in step 304 component process information and component property information may be retrieved from a database in which a plurality of component identifiers (IDs) are stored, together with associated component process information and component property information for each component ID. For example, the component process information for a given component may take the form of a component operating map, which can be combined with other information (e.g. controls and boundary conditions) to determine the effect of the component on the thermodynamic state of the fluid in any given set of circumstances. In this context, the term 'control' refers to a parameter that can be modified by the algorithm when seeking to optimise the cost function, whilst the term 'boundary condition' refers to a parameter having a fixed value that cannot be changed by the algorithm (e.g. a user-defined value for the mass flow rate through the system). The component process information and component property information may be predefined or may be user-defined.

The component process information is used by the algorithm to select a certain combination of components and their operating point that together are capable of converting the fluid from the initial state to the target state (e.g. moving from node 1 to node 4 on the T-S diagram in Fig. 2). The component property information can be used to identify one or more optimised configurations for the system, for example, based on a cost function that takes into account one or more properties defined in the component property information.

The plurality of components comprise components capable of being used in systems for transferring energy to and/or from fluids, for example an ACS. Each one of the components may act on the fluid in some way, for example by compressing or expanding the fluid, or by transferring heat to or from the fluid. The plurality of components may be categorised into different types, or categories, of component, according to their function. The component function information and/or the component property information may include component type information indicative of the type of component. The plurality of components may include more than one component of the same type or subtype, such that the algorithm can evaluate different components of the same type to arrive at the optimum configuration.

Examples of types of components that may be evaluated by the method of Fig. 3 include, but are not limited to: compressive components, which may be referred to as compressors; heat exchangers; and expansion components. Some, or all, component types be further divided into component sub-types. For example, a 'compressor' component type may include 'rotating' and 'non-rotating' (e.g. reciprocating) sub-types. As another example, a 'heat exchanger' component type may include 'cooling' and 'heating' sub-types, according to the function performed by a particular heat exchanger component. A heat exchanger that transfers heat away from the fluid, e.g. to the surrounding environment and/or to a cooling medium, may be categorised as a 'cooling heat exchanger'. Conversely, a heat exchanger that transfers heat to the fluid may be categorised as a 'heating heat exchanger'.

In some embodiments, the plurality of components from which the algorithm can make its selection can include a 'stay' component, which has no effect on the thermodynamic properties of the fluid. By allowing a pathfinding algorithm to select one or more instances of a 'stay' component in this way, the algorithm can in effect explore different numbers of components while nominally still selecting the same number of components in all cases, simplifying the algorithm. In other words, the 'stay' component is not a real component in the physical sense, but can be used to simplify the implementation of the pathfinding algorithm and allow the number of actual components to be optimised. For example, if the algorithm is instructed to select five components and identifies a solution comprising a compressor, a turbine, a heat exchanger and two 'stay' components, this equates in reality to a three-component system (compressor, turbine and heat exchanger).

The component process information associated with a particular component is indicative of an effect of that component on the temperature and entropy of the fluid. For example, the component process information may define the temperature and pressure, with entropy being calculated from the temperature and pressure. The component process information associated with a compressor may define the compressive process performed by the compressor in terms of its isentropic efficiency, for example as a constant or as a performance map of corrected flow rate vs pressure ratio vs isentropic efficiency. Similarly, the component process information associated with an expansion component (e.g. a turbine) may define the expansion process performed by that component in terms of its isentropic efficiency, for example as a constant or as a performance map of corrected flow rate vs expansion ratio vs isentropic efficiency. The component process information associated with a heat exchanger may define its effectiveness, for example as a constant or as a performance map of NTU (Number of Transfer Units) vs effectiveness, and/or may define a pressure drop across the heat exchanger, for example as a constant or as a performance map of pressure drop vs flow rate.

The component property information associated with a particular component is indicative of one or more properties of that component. Examples of properties that may be defined in the component property information include, but are not limited to, the mass, volume, and power requirements of the component. In this context, 'mass' and 'volume' refer to the physical size and mass of the component itself, as opposed to, for example, the mass and volume of fluid that can be held within the component.

Continuing with reference to Fig. 3, in step 306 a pathfinding algorithm is executed to identify one or more configurations of the thermodynamic system, based on the component process information and a cost function. Each configuration comprises a respective combination of components that together are capable of converting the fluid from the first state to the second state, said combination of components being selected from among the plurality of components. The cost function for a given configuration of the system is calculated based on one or more properties of the components selected in that configuration, as defined by the component property information for the selected components.

When identifying one or more configurations of the system in step 306, the pathfinding algorithm may also take into account one or more operating parameters associated with one or more components in the system, such as a flow rate parameter defining the rate of flow of fluid through the component/system (e.g. in terms of a mass flow rate). For example, in some embodiments the mass flow rate of the fluid may be fixed, e.g. as a predetermined value pre-programmed into the pathfinding algorithm or as a user-defined value. In other embodiments, the pathfinding algorithm may be configured to treat the mass flow rate of the fluid as a control variable, in other words, a variable that may be manipulated by the algorithm when attempting to identify the optimum configuration(s). Other examples of operating parameters that may be taken into account by the pathfinding algorithm include, but are not limited to, the flow rate(s) of coolant (e.g. water or air) over any heat exchangers 120 in the system 100, and properties of the coolant (e.g. its specific heat capacity).

In some embodiments, when the effect of a component on the temperature and entropy of the fluid is dependent on one or more operating parameters, the component process information associated with said component may be indicative of a relationship between the one or more operating parameters and the effect of said component on the temperature and entropy of the fluid. By taking into account one or more operating parameters, such as the mass flow rate of fluid through the system, in this way the pathfinding algorithm may be able to more accurately model the performance of each component in terms of its effect on the properties of the fluid on the T-S diagram (e.g. see Fig. 2). For example, in the case of a heat exchanger 120, the performance of the heat exchanger 120 (i.e. the process between nodes 2 and 3 in Fig. 2) may depend on parameters such as the mass flow rate through the system, the coolant flow rate through or over the heat exchanger, and the coolant properties.

Step 306 may also involve outputting a result of the pathfinding algorithm. The output in step 306 may comprise a list of components, the order in which the components are connected, and any associated operating parameters that may have been selected by the pathfinding algorithm (e.g. a mass flow rate through a heat exchanger). In some embodiments, the output of the pathfinding algorithm in step 306 may also comprise the value of the cost function associated with the outputted configuration.

In some embodiments, the method may further comprise a step of selecting the configuration for the thermodynamic system from among the identified one or more configurations in dependence on a respective value of the cost function associated with each identified configuration, as shown in step 308 of Fig. 3. Together, steps 302 to 308 constitute a method of selecting a configuration of a thermodynamic system. Furthermore, in some embodiments the method may further comprise a step of manufacturing or assembling the thermodynamic system according to the selected configuration, as shown in step 310 of Fig. 3. Together, steps 302 to 310 constitute a method of manufacturing or assembling a thermodynamic system.

Pathfinding algorithms are well-known, and a detailed explanation will not be provided here so as not to obscure the present inventive concept. In brief, pathfinding algorithms can be used to identify the optimum solution (or solutions) among a plurality of possible solutions, by optimising the value of a cost function. In the present embodiment, each combination of components (i.e. each possible configuration of the system that can convert the fluid from the first state to the second state) constitutes a potential solution, and the pathfinding algorithm is configured to identify the one or more configurations that have the lowest value(s) of the cost function, among a plurality of potential solutions.

The pathfinding algorithm may follow an optimisation process that involves stepping around the T-S diagram. As such, the state variable grids (e.g. temperature and pressure) may be discretised to form a 'chess-board' or map of destinations. Boundaries may be defined for the state variable grids by taking into account the maximum temperature and pressure that can be tolerated in the system. As the Gibbs-Duhem relation states that only two properties are required, it may not be necessary to define an entropy grid as such, since entropy can be calculated from the temperature and pressure. Depending on the embodiment, the resolution of the state variable grids may be predefined or may be user-defined. In this context, the term 'resolution' refers to the size of the increments used when discretising the state variable grids. For example, when the resolution is user-defined, the user may choose to reduce the resolution (i.e. increase the increment size) when less computing power is available, thereby reducing the time taken for the pathfinding algorithm to complete, or may choose to increase the resolution (i.e. decrease the increment size) when more computing power is available.

The pathfinding algorithm can be configured to manipulate one or more control variables to explore different possible configurations of the system, when trying to identify the optimum configuration(s). Examples of control variables that can be manipulated by pathfinding algorithm include, but are not limited to: the types of components (e.g. compressor 110, heat exchanger 120, turbine 130); the order in which the selected components operate on the fluid; the compression ratio(s) for any compressors in the system; the expansion ratio(s) for any turbines in the system; the mass flow rate of fluid through the system; the coolant flow rate through or over any heat exchangers in the system; and the properties of any such coolant (e.g. specific heat capacity).

The one or more configurations that are identified by the pathfinding algorithm may be referred to as the optimised configuration(s). Any suitable pathfinding algorithm may be used in step 306 to identify the optimised configuration(s). The pathfinding algorithm may be one that is configured to prioritise global optimality (i.e. the optimum output of all processes in combination, in other words the optimality of the overall cycle) over local optimality (i.e. the optimum of each single process), such that the algorithm can identify an optimum architecture and operating point for the entire system.

In most cases, in step 306 it is likely that a single configuration will exist that has a lower value of the cost function than all other possible configurations, in which case there is only one optimum configuration. However, in principle there could be two (or more) configurations that share the same, lowest, value of the cost function, in which case there are a plurality of optimum configurations. In step 306, the pathfinding algorithm may be configured to output the optimum configuration(s).

In some embodiments, the pathfinding algorithm may be configured to output one or more sub-optimal configurations in step 306, instead of or in addition to the optimum configuration(s). For example, in step 306 the pathfinding algorithm may be configured to output a fixed number of configurations, n, having the n lowest values of the cost function among a plurality of possible configurations. In such cases, a user could then select which of the n solutions to use when manufacturing or assembling the system.

Further aspects of the method of Fig. 3 will now be described with reference to Figs. 4 and 5, which schematically illustrate GUIs 400, 500 for obtaining input parameters for use with the method of Fig. 3, according to an embodiment of the present invention.

As described above, the GUIs 400, 500 comprises user input elements through which the user can input the first and second temperature values and the first and second entropy values (as in the case of the first GUI 400), or through which the user can input values of design parameters that can be used to obtain some or all of the first and second temperature values and the first and second entropy values (as in the case of the second GUI 500). Additionally, in the present embodiment the first and second GUIs 400, 500 comprise other user input elements through which the user can specify certain criteria that must be taken into account by the pathfinding algorithm when attempting to find the optimum configuration(s). In pathfinding algorithms such criteria may be referred to as 'constraints', and can be used by the pathfinding algorithm to decide whether or not a particular process/component is permitted.

In the present embodiment, the criteria that can be defined by a user through the GUI 400, 500 include the number of components that may be selected within any given configuration. In some embodiments, this may be taken by the pathfinding algorithm as a fixed constraint (in other words, the pathfinding algorithm must always select the specified number of components). In other embodiments, the number of components that can be selected may be treated as a control variable, and the number that is specified by the user may be treated as a constraint on the maximum number of components that can be selected.

In some embodiments, the criteria that can be defined by a user through the GUI 400, 500 can further comprise a constraint on the number and/or types of components that may be selected by the pathfinding algorithm. For example, the GUI may be configured to allow a user to select certain ones of a plurality of components (e.g. compressors, heat exchangers, turbines etc.). In such embodiments, the selection of components by the user constitutes a further constraint on the pathfinding algorithm, in that the pathfinding algorithm may then only choose from among the user-selected components when attempting to find the optimum configuration(s).

In general, the cost function may either be fixed (i.e. predetermined) or may be variable (e.g. user-defined). Also, the cost function may either be a single-objective function or a multi-objective function. For example, a single-objective cost function can be used to optimise a single objective, e.g. the total mass or total volume of the system, or the mass or volume of a particular component within the system. In the case of a multi-objective cost function, a value of the cost function may be calculated based on a weighted sum of respective values associated with a plurality of objectives, such that the pathfinding algorithm takes into account more than one objective (e.g. performance, mass or volume) when trying to find the optimum configuration(s).

A weighted sum approach to multi-objective optimisation (MOO) has the advantage of being applicable in combination with deterministic optimisation algorithms, meaning that the algorithm explores all of the solution space and will always produce the same output (in other words, the weighted sum method applied on top of the algorithm is complete and repeatable). However, in other embodiments where multiple objectives are defined, a different MOO approach may be used. For example, in some embodiments a genetic algorithm (GA) or an evolutionary algorithm (EA) may be used, which can include the multi-objective nature of the desired output within the optimisation algorithm. GAs and EAs are not deterministic, meaning that a different result may be obtained each time the algorithm is run, but may require fewer computing resources compared to a weighted sum method applied in combination with a deterministic algorithm.

In the present embodiment the cost function is user-defined, and is a multi-objective performance-mass-volume-ratio (PMVR) cost function. As such, the GUI 400, 500 includes user input elements (e.g. text boxes or dropdown lists) to allow the user to define the respect weightings for each of a plurality of objectives (performance, mass and volume). By choosing appropriate weightings, the user can configure the pathfinding algorithm to prioritise certain objectives over others. For example, by increasing the weighting for volume and decreasing the weightings for performance and mass, the pathfinding algorithm will then prioritise smaller systems over performance and mass. In some embodiments, the user interface may allow a user to fully define the cost function, which may be defined as either a single-objective or multi-objective cost function, as opposed to just selecting weights for a predefined multi-objective cost function. In some embodiments, the optimisation algorithm may be run (e.g. automatically or under manual control) against a plurality of different combinations of objective weights, each combination comprising different values of the objective weights compared to other combinations, to obtain a multi-dimensional pareto set of optimality. The pareto set, which may be also be referred to as a pareto function, provides an indication of how changes to the objective weightings can affect the optimum solution.

In some embodiments, other criteria/constraints may be defined instead of, or in addition to, those described above with reference to Figs. 4 and 5. The criteria/constraints may relate to the one or more properties of each component that are defined in the component property information. For example, in embodiments in which the component property information defines the mass of each component, the criteria/constraints may include an upper limit on the mass of a component that can be selected (e.g. do not select compressors with a mass greater than 5 kg).

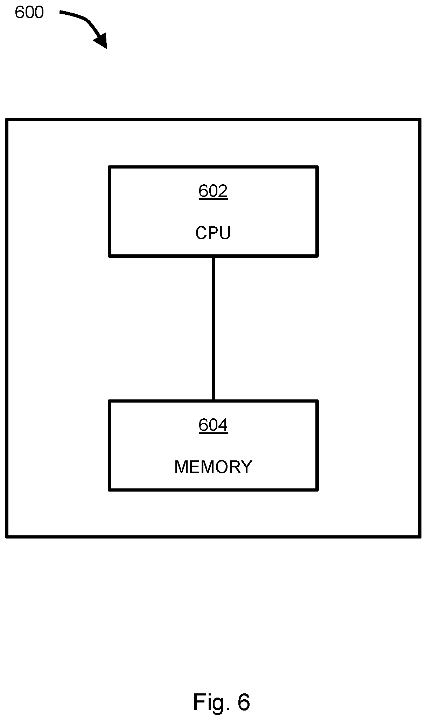

Referring now to Fig. 6, apparatus for performing a computer-implemented method of configuring a thermodynamic system is schematically illustrated, according to an embodiment of the present invention. The apparatus 600 comprises one or more processors 602. The one or more processors 602 may, for example, comprise a general-purpose processor. The one or more processors 602 may be a single core device or a multiple core device. The one or more processors 602 may comprise a Central Processing Unit (CPU) or a graphical processing unit (GPU). Alternatively, the one or more processors 602 may comprise specialised processing hardware, for instance a Reduced Instruction Set Computer (RISC) processing unit or programmable hardware with embedded firmware. Multiple processors 602 may be included.

The apparatus 600 comprises a memory 604. The memory 604 may comprise a working or volatile memory. The one or more processors 602 may access the volatile memory in order to process data and may control the storage of data in memory. The volatile memory may comprise Random Access Memory (RAM) of any type, for example GPU RAM, Static RAM (SRAM), Dynamic RAM (DRAM), or it may comprise Flash memory, such as an SD-Card.

The memory 604 may comprise a non-volatile memory, which may also be referred to as non-transitory memory. The non-volatile memory stores a set of operating instructions for controlling the operation of the one or more processors 602 in the form of computer-readable instructions. The non-volatile memory may be any kind of non-transitory computer-readable storage medium, such as a Read Only Memory (ROM), a Flash memory or a magnetic drive memory.

The one or more processors 602 are configured to execute operating instructions to cause the apparatus 600 to perform any of the methods described herein, for example a method such as the one described above with reference to Figs. 3, 4 and 5. The operating instructions may comprise code (i.e. drivers) relating to the hardware components of the apparatus 600, as well as code relating to the basic operation of the apparatus 600. Generally speaking, the one or more processors 602 execute one or more instructions of the operating instructions, which are stored permanently or semi-permanently in the non-volatile memory, using the volatile memory to temporarily store data generated during execution of said operating instructions.

Whilst certain embodiments of the invention have been described herein with reference to the drawings, it will be understood that many variations and modifications will be possible without departing from the scope of the invention as defined in the accompanying claims.

## Claims

1. A computer-implemented method for configuring a thermodynamic system, the method comprising:
obtaining information indicative of a first temperature value and a first entropy value defining an initial state of a fluid, and indicative of a second temperature value and a second entropy value defining a target state of the fluid;
obtaining, for each one of a plurality of components, component process information indicative of an effect of the component on the temperature and entropy of the fluid, and component property information indicative of one or more properties of the component;
identifying one or more configurations of the thermodynamic system based on the component process information and a cost function related to said one or more properties, wherein each configuration comprises a respective combination of components capable of converting the fluid from the initial state to the target state, said combination of components being selected from among the plurality of components.

2. The method according to claim 1, wherein each configuration further comprises one or more operating parameters associated with one or more of the components included in said configuration.

3. The method according to claim 2, wherein for one or more of the plurality of components the effect of said component on the temperature and entropy of the fluid is dependent on said one or more operating parameters, and the component process information for said component is indicative of a relationship between the one or more operating parameters and the effect of said component on the temperature and entropy of the fluid.

4. The method according to claim 2 or 3, wherein the one or more operating parameters include a flow rate parameter defining a flow rate of the fluid through one or more of the components included in said configuration.

5. The method according to any one of claims 1 to 4, wherein identifying one or more configurations of the thermodynamic system comprises selecting said ones of the plurality of components according to one or more criteria.

6. The method according to claim 5, wherein the one or more criteria relate to the one or more properties of each component, and/or
wherein the one or more criteria include a maximum number of components that may be selected within any given configuration.

7. The method according to any one of claims 1 to 6, wherein the cost function comprises a multi-objective cost function.

8. The method according to claim 7, wherein a value of the multi-objective cost function is calculated based on a weighted sum of respective values associated with a plurality of objectives.

9. The method according to any one of claims 1 to 8, wherein the one or more configurations of the thermodynamic system are identified using a pathfinding algorithm, the method comprising:
outputting a result of the pathfinding algorithm.

10. The method according to claim 9, wherein outputting the result of the pathfinding algorithm comprises outputting a respective value of the cost function associated with each of the identified one or more configurations, and/or
wherein outputting the result of the pathfinding algorithm comprises outputting information indicative of an optimum configuration among the identified one or more configurations, the optimum configuration being a configuration associated with the lowest value of the cost function among the identified one or more configurations.

11. A method of selecting a configuration of a thermodynamic system, the method comprising:
using the computer-implemented method according to any one of claims 1 to 10 to identify one or more configurations of the thermodynamic system; and
selecting the configuration for the thermodynamic system from among the identified one or more configurations in dependence on a respective value of the cost function associated with each identified configuration.

12. A method of manufacturing or assembling a thermodynamic system, the method comprising:
using the method according to claim 11 to select a configuration for the thermodynamic system; and
manufacturing or assembling the thermodynamic system according to the selected configuration.

13. A computer program comprising instructions which, when executed by one or more processors, cause said one or more processors to carry out a method according to any one of claims 1 to 11.

14. A non-transitory computer-readable storage medium having stored thereon a computer program according to claim 13.

15. Apparatus comprising:
the non-transitory computer-readable storage medium according to claim 14; and
one or more processors arranged to execute the computer program stored on said non-transitory computer-readable storage medium.
